# EUROPEAN PATENT APPLICATION

(11) **EP 4 156 758 A1**
(43) Date of publication of application: **29.03.2023**
(21) Application number: 20937134.3
(22) Date of filing: 22.05.2020
(51) Int. Cl.: H04W 24/10

(54) **SENDING DEVICE, RECEIVING DEVICE, INTERFERENCE INFORMATION SENDING METHOD AND CHANNEL ACCESS METHOD**

(71) Applicant: NTT DOCOMO, INC., Tokyo (JP)
(72) Inventor: WANG, Jing, Beijing 100190 (CN); HOU, Xiaolin, Beijing 100190 (CN); CHEN, Lan, Beijing 100190 (CN); LIU, Liu, Beijing 100190 (CN); LI, Yong, Beijing 100190 (CN); SHA, Tong, Beijing 100190 (CN); HARADA, Hiroki, Beijing 100190 (CN); KUMAGAI, Shinya, Beijing 100190 (CN)
(74) Representative: Hoffmann Eitle
(86) International application number: PCT/CN2020/091839
(87) International publication number: WO 2021/232413

(57) **Abstract**

Provided in the present disclosure are a sending device, a receiving device, an interference information sending method and a channel access method. The receiving device comprises: a processing unit, which is used to measure the interference of an unlicensed frequency band so as to obtain interference information; and the sending unit, which is used to send the interference information to the sending device.

## Description

### TECHNICAL FIELD

The present disclosure relates to a field of wireless communication, and more particularly, to a method for transmitting interference information, a method for accessing an unauthorized frequency band, and a corresponding transmitting device and receiving device.

### BACKGROUND

Since unauthorized frequency bands have characteristics of spectrum sharing, in order to ensure fair coexistence between nodes within a system and with other access technologies, a NR-U system adopts a channel access mechanism, Listen Before Talk (LBT). Specifically, a transmitting end needs to perform channel idle detection through the LBT mechanism before transmission, and can occupy a channel for transmission only after the idle detection is successful.

In the existing LBT mechanism, channel idle detection is only performed at the transmitting end without considering channel conditions of a receiving end. Therefore, when channel detection conditions of the transmitting end and the receiving end are inconsistent, data transmission will be interfered. In addition, it may also lead to over-protection of a channel, so that transmission cannot be performed when the channel is not interfered, resulting in waste of channel resources.

In particular, when the beamforming technology is used in the NR-U system, channel conditions in different beam directions are different, which aggravates differences between the transmitting end and the receiving end in detecting idle states of channels. Therefore, the traditional LBT mechanism will reduce utilization efficiency of channel resources and seriously affect system throughput.

### SUMMARY OF THE DISCLOSURE

According to an aspect of the present disclosure, a receiving device is provided. The receiving device includes: a processing unit configured to perform interference measurement on an unauthorized frequency band to obtain interference information; and a transmitting unit configured to transmit the interference information to a transmitting device.

According to another aspect of the present disclosure, a transmitting device is provided. The transmitting device includes: a receiving unit configured to receive interference information from a receiving device; and a processing unit configured to determine at least one of a channel access mode of the transmitting device for an unauthorized frequency band and a scheduling mode of the receiving device according to the interference information.

According to another aspect of the present disclosure, a method for transmitting interference information performed by a receiving device is provided. The method includes: performing interference measurement on an unauthorized frequency band to obtain interference information; and transmitting the interference information to a transmitting device.

According to another aspect of the present disclosure, a method for channel access to an unauthorized frequency band performed by a transmitting device is provided. The method includes: receiving interference information from a receiving device; and determining at least one of a channel access mode of the transmitting device for an unauthorized frequency band and a scheduling mode of the receiving device according to the interference information.

### BRIEF DESCRIPTION OF THE DRAWINGS

The foregoing and other objectives, features and advantages of the present disclosure will become clearer from more detailed description of embodiments of the present disclosure in conjunction with accompanying drawings. The accompanying drawings are used to provide a further understanding of the embodiments of the present disclosure, constitute a part of this specification, and help to explain the present disclosure together with the embodiments of the present disclosure, but are not intended to act as a limitation of the present disclosure. In the accompanying drawings, like reference numerals usually indicate like components or steps.
FIG. 1A is an example of a wireless communication system in which the embodiments of the present disclosure may be applied.
FIG. 1B is another example of a wireless communication system in which the embodiments of the present disclosure may be applied.
FIG. 2 is a schematic block diagram illustrating a receiving device according to an embodiment of the present disclosure.
FIG. 3 is a schematic block diagram illustrating a transmitting device according to an embodiment of the present disclosure.
FIG. 4 is a flowchart of a method for transmitting interference information performed by a receiving device according to an embodiment of the present disclosure.
FIG. 5 is a flowchart of a method for channel access to an unauthorized frequency band performed by a transmitting device according to an embodiment of the present disclosure.
FIG. 6 is a schematic diagram of a hardware structure of a device involved according to an embodiment of the present disclosure.

### DESCRIPTION OF THE EMBODIMENTS

In order to make objectives, technical solutions and advantages of the present disclosure clearer, exemplary embodiments according to the present disclosure will be described in detail below with reference to the accompanying drawings. Like reference numerals refer to like elements throughout the accompanying drawings. It should be understood that the embodiments described herein are merely illustrative and should not be constructed as limiting the scope of the present disclosure. Moreover, terminals described herein may include various types of terminals, for example, User Equipment (UE), mobile terminals (or referred to as mobile stations) or fixed terminals. However, for the sake of convenience, UE and mobile terminals sometimes may be used interchangeably hereinafter.

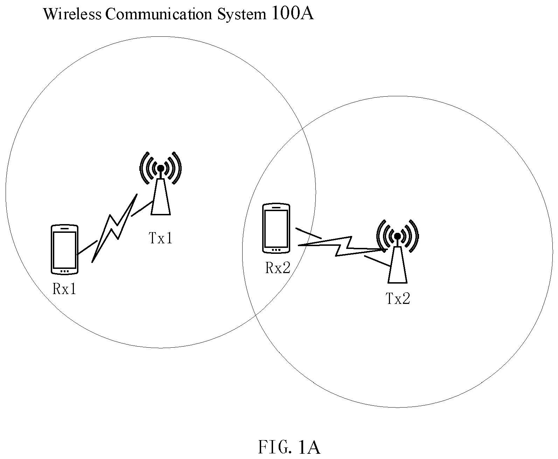

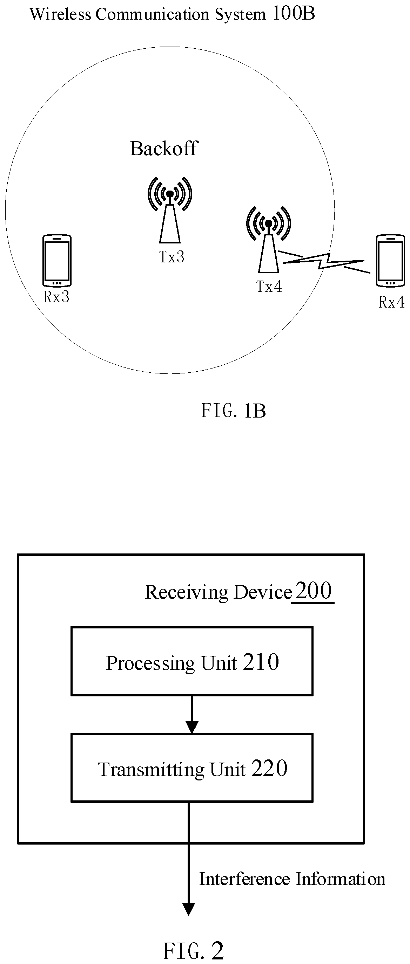

First, a wireless communication system in which the embodiments of the present disclosure may be applied will be described with reference to FIGS. 1A and 1B. Hereinafter, the embodiments of the present disclosure will be described by taking a NR-U system as an example, but it should be appreciated that the following description may also be applied to other types of wireless communication systems.

FIG. 1A is an example of a wireless communication system in which the embodiments of the present disclosure may be applied. As shown in FIG. 1A, the wireless communication system 100A may include a base station Tx1, a base station Tx2, a terminal Rx1, and a terminal Rx2. In the example shown in FIG. 1A, both the terminal Rx1 and the terminal Rx2 are located within a reception range of the base station Tx1. On the other hand, the base station Tx2 is outside a listening range of the base station Tx1, so the base station Tx1 cannot know a transmission situation of the base station Tx2, which will cause a hidden node problem. In particular, during communication between the base station Tx2 and the terminal Rx2, since the transmission situation of the base station Tx2 cannot be detected, the base station Tx1 will misjudge that a channel within its transmission range is in an idle state. If the base station Tx1 communicates with the terminal Rx1 at this time, since the terminal Rx2 is located within the reception range of the base station Tx1, the communication between the base station Tx1 and the terminal Rx1 will affect data reception by the terminal Rx2 from the base station Tx2.

FIG. 1B is another example of a wireless communication system in which the embodiments of the present disclosure may be applied. As shown in FIG. 1B, the wireless communication system 100B may include a base station Tx3, a base station Tx4, a terminal Rx3, and a terminal Rx4. In the example shown in FIG. 1B, the base station Tx3 and the base station Tx4 can detect each other's channel conditions. On the other hand, the terminal Tx4 is outside a reception range of the base station Tx3, which may lead to a problem of node exposure. In particular, when it is detected that the base station Tx4 communicates with the terminal Rx4, the base station Tx3 will back off. For example, the base station Tx3 may back off from communicating with the terminal Rx3. However, since the terminal Tx4 is outside the reception range of the base station Tx3, the communication between the base station Tx4 and the terminal Rx4 does not actually affect the communication between the base station Tx3 and the terminal Rx3, so the above backoff leads to a waste of channel resources.

In order to solve the above problems, the present disclosure proposes a method for transmitting interference information, a method for channel access, and a corresponding transmitting device and receiving device. In the present disclosure, a transmitting device refers to a device to perform data transmission through an unauthorized channel, and a receiving device refers to a device to perform data reception through an unauthorized channel. In the following embodiments of the present disclosure, the transmitting device may be a base station, and the receiving device may be a terminal. However, it should be appreciated that the following description is also applicable to other types of transmitting devices and receiving devices.

A receiving device 200 according to an embodiment of the present disclosure will be described below with reference to FIG. 2. As shown in FIG. 2, a receiving device 200 according to an embodiment of the present disclosure may include a processing unit 210 and a transmitting unit 220. In addition to the processing unit and the transmitting unit, the receiving device 200 may further include other components, however, since these components are not related to the content of the embodiments of the present disclosure, their illustration and description are omitted herein.

As shown in FIG. 2, the processing unit 210 may perform interference measurement on an unauthorized frequency band to obtain interference information. For example, the processing unit 210 may perform interference measurement on an unauthorized frequency band to obtain interference information before the receiving device 200 receives data through the unauthorized frequency band. Furthermore, according to an example of the present disclosure, the interference information may be information indicating a value of interference power or an interference power level.

The processing unit 210 may determine the interference power level by comparing the interference power with predetermined thresholds. For example, interference power thresholds Th1 and Th2 may be preset, where Th1 is greater than Th2. When the interference power of the unauthorized frequency band is greater than Th1, the processing unit 210 may determine that the interference power level is high interference. When the interference power of the unauthorized frequency band is greater than or equal to Th1, the processing unit 210 may determine that the interference power level is high interference. When the interference power of the unauthorized frequency band is less than Th1 and greater than Th2, the processing unit 210 may determine that the interference power level is medium interference. When the interference power of the unauthorized frequency band is less than or equal to Th2, the processing unit 210 may determine that the interference power level is low interference. The processing unit 210 may obtain the corresponding interference information according to the determined interference level.

Alternatively, the processing unit 210 may also determine the interference power level according to a proportion of time that the interference power is higher than a threshold within a measurement period. For example, an interference power threshold Th3, time proportion thresholds M% and N% may be preset, where M is greater than N. When the proportion of time that the measured interference power is higher than the interference power threshold Th3 within a predetermined period is greater than or equal to M, the processing unit 210 may determine that the interference power level is high interference. When the proportion of time that the measured interference power is higher than the interference power threshold Th3 within the predetermined period is less than M and greater than N, the processing unit 210 may determine that the interference power level is medium interference. When the proportion of time that the measured interference power is higher than the interference power threshold Th3 within the predetermined period is less than or equal to N, the processing unit 210 may determine that the interference power level is low interference. The processing unit 210 may obtain the corresponding interference information according to the determined interference level.

Furthermore, the processing unit 210 may perform the interference measurement omnidirectionally or according to a spatial parameter. According to an example of the present disclosure, the processing unit 210 may perform omnidirectional energy detection to obtain omnidirectional interference information. According to another example of the present disclosure, the processing unit 210 may perform directional interference measurement according to a spatial parameter, *Spatial Rx Parameter.* The spatial parameter *Spatial Rx Parameter* may be a spatial parameter in QCL-TypeD. In addition, the spatial parameter *Spatial Rx Parameter* may indicate a specific beam. Therefore, the processing unit 210 may obtain the interference information for a specific beam direction according to the indication of the spatial parameter. For example, the receiving device 200 may further include a receiving unit to receive beam information. The beam information may be a synchronization signal block or a channel state information reference signal index (SSB/CSI-RS index). The processing unit 210 may perform interference measurement on the synchronization signal block (SSB) or the channel state information reference signal (CSI-RS) index according to the spatial parameter, and obtain a value of interference power or an interference power level corresponding to the SSB or the CSI-RS index. In other words, the processing unit 210 may obtain interference information for a specific beam according to the spatial parameter. The interference information may include information indicating the value of the interference power or the interference power level corresponding to the SSB or CSI-RS index. Alternatively, the interference information may include information indicating the SSB or CSI-RS index and its corresponding interference value or interference level. Furthermore, the processing unit 210 may perform measurements for one or more SSB or CSI-RS indices, and obtain an interference value or an interference level corresponding to each SSB or CSI-RS index, respectively. In this case, for example, the interference level information may be CSI-RS index 1 and corresponding interference level 1, CSI-RS index 2 and corresponding interference level 2, CSI-RS index 3 and corresponding interference level 3. For another example, the interference level information may also be SSB index 1 and corresponding interference level 1, SSB index 2 and corresponding interference level 2, SSB index 3 and corresponding interference level 3.

Furthermore, according to an example of the present disclosure, the receiving unit may also receive measurement resource configuration information. For example, the measurement resource configuration information may indicate a reference signal to be measured, indicate that the interference measurement is to be performed at least one of in an omnidirectional manner or according to the spatial parameter, and the like. The receiving unit may receive configured measurement resources or reference signals for measurement transmitted by a network side to the receiving device 200 in a static, semi-static or dynamic way.

The transmitting unit 220 transmits the interference information obtained by the processing unit 210 to the transmitting device. As described above, the receiving device 200 may further include a receiving unit. The receiving unit may further receive feedback configuration information. The transmitting unit 220 may transmit the interference information to the transmitting device according to the feedback configuration information. For example, in the case where the processing unit 210 performs interference measurement in a specific beam direction according to the SSB or CSI-RS index, the transmitting unit may transmit, to the transmitting device, the measured SSB or CSI-RS index and a value of interference power or interference power level corresponding to the index.

According to an example of the present disclosure, the receiving unit may receive the feedback configuration information transmitted by the network side. The feedback configuration information may indicate the receiving device to report interference measurement information to the transmitting device in a static, semi-static or dynamic way. Furthermore, the receiving unit may receive RRC signaling. The network side may statically configure, for example, a transmission mode for the interference information, transmission resources for the interference information, interference power thresholds, etc. through the RRC signaling. For another example, the receiving unit may receive DCI signaling. The processing unit 210 may activate periodic transmission of the interference information according to the DCI signaling received by the receiving unit. Furthermore, the transmitting device may determine an interference level near the receiving device according to situation of HARQ feedback transmitted by the receiving device. For example, when the receiving device continuously feeds back NACK or DTX, it may be determined that there may be hidden nodes around the receiving device, and the receiving unit of the receiving device 200 may receive DCI signaling that dynamically indicates it to perform interference measurement and reporting. With the reported interference information, the transmitting device may better adjust the channel access mode and the scheduling mode.

Furthermore, the transmitting unit 220 may transmit the interference information on an authorized frequency band or an unauthorized frequency band. For example, in a carrier aggregation/dual connectivity (CA/DC) scenario, the transmitting unit 220 may transmit the interference information using authorized resources to improve feedback reliability. In a standalone access (SA) scenario, the transmitting unit 220 may use unauthorized resources to transmit the interference information.

In the embodiment according to the present disclosure, a receiving device that receives data through an unauthorized frequency band performs channel interference measurement, and transmits the obtained interference information to a transmitting device that is to use the unauthorized frequency band for transmission, so that the transmitting device can perform operations such as channel access to the unauthorized frequency band according to the interference information, thereby avoiding problems of hidden nodes and exposed nodes.

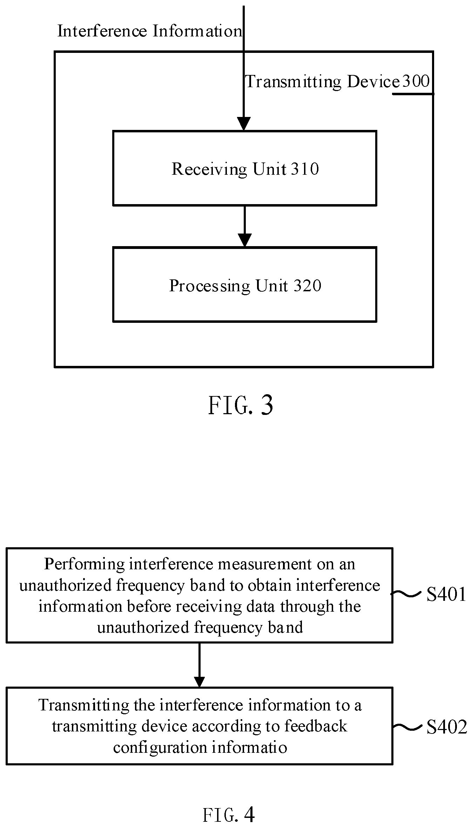

A transmitting device 300 according to an embodiment of the present disclosure will be described below with reference to FIG. 3. As shown in FIG. 3, a transmitting device 300 according to an embodiment of the present disclosure may include a receiving unit 310 and a processing unit 320. In addition to the processing unit and the receiving unit, the transmitting device 300 may further include other components, however, since these components are not related to the content of the embodiments of the present disclosure, their illustration and description are omitted herein.

As shown in FIG. 3, the receiving unit 310 may receive interference information from a receiving device. In particular, the interference information may be information obtained by the receiving device performing channel interference measurement on an unauthorized frequency band. The interference information has been described in detail above with reference to FIG. 2, which will not be repeatedly described herein.

The processing unit 320 may determine, according to the interference information, at least one of a channel access mode of the transmitting device for the unauthorized frequency band and a scheduling mode of the receiving device. According to an example of the present disclosure, the channel access mode for the unauthorized frequency band includes at least one of LBT type or category, priority and direction.

For example, four categories of LBTs from CAT 1 to CAT 4 are defined in NR-U, of which CAT 1 is non-LBT and is mainly used for uplink and downlink transmission switching within Channel Occupancy Time (COT); CAT 2 is a fixed-length LBT without random backoff procedure, which is used for fast access to channels; CAT 3 is a random backoff LBT with a fixed backoff window; CAT 4 is a random backoff LBT with a variable backoff window, which is mainly used before the transmitting or receiving device starts data transmission, occupies a channel for the first time, and the like.

Furthermore, two types of LBTs, Type 1 and Type 2, are also defined in NR-U. Similar to LBT category, LBT type also indicates a backoff mode. Specifically, there may be a correspondence between LBT type and LBT category as shown in Table 1 below.

**Table 1**

| Type 1 | | CAT 4 |
|---|---|---|
| Type 2 | Type 2A | 25us CAT 2 |
| | Type 2B | 16us CAT 2 |
| | Type 2C | CAT 1 |

As shown in Table 1, the access speed of Type 2 is faster than that of Type 1, the access speed of Type 2C is faster than that of Type 2B, and the access speed of Type 2B is faster than that of Type 2A.

For Type 1 or CAT 4, NR-U defines different priority levels and corresponding parameters, as shown in the following Table 2. The smaller the value of LBT priority, the shorter the backoff time and the faster the access.

**Table 2 Channel Access Priority Class (CAPC)**

| **Channel Access Priority Class (µ)** | ***m*_{D}** | ***CW_{min,D}*** | ***CW_{max,D}*** | ***T_{mcot,D}*** | Allowed ***cw_{D}*** size |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

In Table 2, mₚ denotes a duration of consecutive slots, *CW_{min,p}* denotes the minimum size of a contention window, *CW_{max,p}* denotes the minimum size of the contention window, *CWₚ* denotes the contention window, and T_{mcot,p} denotes the maximum channel occupation time.

According to an example of the present disclosure, when the interference information indicates that the interference level of the receiving device is low, assuming that LBT category has been selected as Type 1 according to types of data to be transmitted specified by NR-U, the processing unit 320 may determine that a value of LBT priority used by the transmitting device is small, resulting in a short backoff time and a fast access speed. On the contrary, when the interference information indicates that the interference level of the receiving device is high, assuming that LBT category has been selected as Type 1 according to types of data to be transmitted specified by NR-U, the processing unit 320 may determine that a value of LBT priority used by the transmitting device is large, resulting in a long backoff time and a slow access speed.

According to another example of the present disclosure, in addition to selecting LBT type according to types of data to be transmitted specified by NR-U, the selected LBT type may also be adjusted in conjunction with the interference information. For example, when the interference information indicates that the interference level of the receiving device is low, LBT type may be adjusted to a type with a faster access speed, such as adjusting LBT type that was originally Type 1 to Type 2A, or adjusting LBT type that was originally Type 2A to Type 2B.

In addition, when the interference information indicates that the interference level of the receiving device is low, the processing unit 320 may further determine that the transmitting device performs LBT in a specific direction. Conversely, when the interference information indicates that the interference level of the receiving device is high, the processing unit 320 may further determine that the transmitting device performs omnidirectional LBT.

The transmitting device may also jointly consider a type of data to be transmitted and indication of the interference information to determine one or more of LBT type, LBT priority, directional or omnidirectional LBT to be used by the transmitting device.

For example, when the transmitting device wishes to use Physical Downlink Control Channel (PDCCH) or Physical Downlink Shared Channel (PDSCH) for transmission, if the interference information indicates that the interference level of the receiving device is high interference, the processing unit 320 may determine that the transmitting device performs omnidirectional LBT by using low-priority Type 1 when accessing. If the interference information indicates that the interference level of the receiving device is low interference, the processing unit 320 may determine that the transmitting device performs directional LBT by using high-priority Type 1 or even Type 2 when accessing.

The processing unit 320 may determine at least one of a channel access mode of the transmitting device for an unauthorized frequency band and a scheduling mode of the receiving device according to the interference information from one receiving device. In particular, the determined channel access mode and scheduling mode of the receiving device may be for all receiving devices or any receiving device. Alternatively, the processing unit 320 may determine at least one of a channel access mode of the transmitting device for an unauthorized frequency band for scheduling and data transmission of the receiving device, and a scheduling mode of the receiving device according to the interference information from one receiving device. Alternatively, the processing unit 320 may determine at least one of a channel access mode of the transmitting device for an unauthorized frequency band and scheduling mode of receiving devices according to interference information from a plurality of receiving devices.

According to an example of the present invention, when a plurality of receiving devices connected to the transmitting device transmit interference information, the processing unit 320 may determine, according to the interference information of the plurality of receiving devices, at least one of a channel access mode of the transmitting device for an unauthorized frequency band and a scheduling mode of the receiving device in accordance with an interference level or interference value with the highest proportion.

Alternatively, the processing unit 320 does not necessarily determine, according to the interference information of the plurality of receiving devices, at least one of a channel access mode of the transmitting device for an unauthorized frequency band and a scheduling mode of the receiving device in accordance with an interference level or interference value with the highest proportion every time. Rather, only when the interference information indicates that the interference level or interference value with the highest proportion among the plurality of devices satisfies a predetermined condition, the processing unit 320 determines at least one of a channel access mode of the transmitting device for an unauthorized frequency band and a scheduling mode of the receiving device in accordance with the interference level or interference value with the highest proportion. Otherwise, the processing unit 320 may determine that the transmitting device uses an original channel access mode.

For example, when a plurality of receiving devices connected to the transmitting device transmit interference information, the processing unit 320 may determine, only in the case that the interference level or interference value with the highest proportion of the interference information transmitted by the plurality of receiving devices is greater than or equal to a predetermined proportion threshold, at least one of a channel access mode of the transmitting device for an unauthorized frequency band and a scheduling mode of the receiving device in accordance with the interference level or interference value with the highest proportion; otherwise, the transmitting device may use an original channel access mode. For example, when a plurality of receiving devices connected to the transmitting device transmit interference information, and interference information from more than 80% of the receiving devices indicates low interference, the processing unit 320 determines, according to the low interference, at least one of a channel access mode of the transmitting device for an unauthorized frequency band and a scheduling mode of the receiving device; otherwise, the processing unit 320 may determine that the transmitting device uses an original channel access mode.

For another example, when a plurality of receiving devices connected to the transmitting device transmit interference information, the processing unit 320 may determine, only in the case that a difference between the interference level or interference value with the highest proportion and the interference level or interference value with the second highest proportion in the interference information transmitted by the plurality of receiving devices is greater than or equal to a predetermined difference threshold, at least one of a channel access mode of the transmitting device for an unauthorized frequency band and a scheduling mode of the receiving device in accordance with the interference level or interference value with the highest proportion; otherwise, the transmitting device may use an original channel access mode. For example, when a plurality of receiving devices connected to the transmitting device transmit interference information, and a difference between interference information indicating low interference and interference information indicating medium interference is greater than or equal to 30%, the processing unit 320 determines, according to the low interference level, at least one of a channel access mode of the transmitting device for an unauthorized frequency band and a scheduling mode of the receiving device.

For another example, when a plurality of receiving devices connected to the transmitting device transmit interference information, the processing unit 320 may determine, only in the case that a sum of proportions of two adjacent interference levels in the interference information transmitted by the plurality of receiving devices is greater than or equal to a predetermined threshold of a sum of proportions, at least one of a channel access mode of the transmitting device for an unauthorized frequency band and a scheduling mode of the receiving device in accordance with the interference level or interference value with the highest proportion; otherwise, the transmitting device may use an original channel access mode. For example, when a plurality of receiving devices connected to the transmitting device transmit interference information, and a sum of interference information indicating high interference and interference information indicating medium interference is greater than or equal to 85%, the processing unit 320 determines, according to the high interference or medium interference, at least one of a channel access mode of the transmitting device for an unauthorized frequency band and a scheduling mode of the receiving device.

In addition, according to another example of the present invention, the processing unit 320 may determine a scheduling priority of the receiving device according to the interference information. For example, the processing unit 320 may determine that a receiving device with low interference has a high scheduling priority, whereas a receiving device with high interference has a low scheduling priority. Therefore, the transmitting device may preferentially schedule the receiving device with low interference.

According to another example of the present invention, the transmitting device 300 may further include a transmitting unit configured to transmit data to the receiving device after accessing the unauthorized frequency band according to the channel access mode determined by the processing unit 320. Furthermore, when the interference information received by the transmitting device after the channel access indicates that the receiving device is in a high interference state, the processing unit 320 may determine to stop transmission and re-access the channel.

In the embodiment according to the present disclosure, the transmitting device performs operations such as channel access to an unauthorized frequency band according to interference information from a receiving device, thereby avoiding a difference between a transmitting end and a receiving end in detection of an idle state of channels, preventing problems of hidden nodes and exposed nodes, and bringing effective utilization of channel resources.

A method for transmitting interference information according to an embodiment of the present disclosure will be described below with reference to FIG. 4. FIG. 4 is a flowchart of a method 400 for transmitting interference information performed by a receiving device according to an embodiment of the present disclosure. Since steps of the method 400 for transmitting interference information correspond to the operations of the receiving device 200 described above with reference to the drawings, detailed description of the same content is omitted herein for simplicity.

As shown in FIG. 4, in step S401, interference measurement is performed on an unauthorized frequency band to obtain interference information. For example, interference measurement may be performed on an unauthorized frequency band to obtain interference information before a receiving device receives data through the unauthorized frequency band. Furthermore, according to an example of the present disclosure, the interference information may be information indicating a value of interference power or an interference power level.

In step S401, the interference power level may be determined by comparing the interference power with predetermined thresholds. For example, interference power thresholds Th1 and Th2 may be preset, where Th1 is greater than Th2. When the interference power of the unauthorized frequency band is greater than Th1, it may be determined that the interference power level is high interference. When the interference power of the unauthorized frequency band is greater than or equal to Th1, it may be determined that the interference power level is high interference. When the interference power of the unauthorized frequency band is less than Th1 and greater than Th2, it may be determined that the interference power level is medium interference. When the interference power of the unauthorized frequency band is less than or equal to Th2, it may be determined that the interference power level is low interference. The corresponding interference information may be obtained according to the determined interference level.

Alternatively, in step S401, the interference power level may also be determined according to a proportion of time that the interference power is higher than a threshold within a measurement period. For example, an interference power threshold Th3, time proportion thresholds M% and N% may be preset, where M is greater than N. When the proportion of time that the measured interference power is higher than the interference power threshold Th3 within a predetermined period is greater than or equal to M, it may be determined that the interference power level is high interference in step S401. When the proportion of time that the measured interference power is higher than the interference power threshold Th3 within the predetermined period is less than M and greater than N, it may be determined that the interference power level is medium interference in step S401. When the proportion of time that the measured interference power is higher than the interference power threshold Th3 within the predetermined period is less than or equal to N, it may be determined that the interference power level is low interference in step S401.Moreover, in step S401, the corresponding interference information may be obtained according to the determined interference level.

Furthermore, in step S401, the interference measurement may be performed omnidirectionally or according to a spatial parameter. According to an example of the present disclosure, omnidirectional energy detection may be performed in step S401 to obtain omnidirectional interference information. According to another example of the present disclosure, directional interference measurement may be performed according to a spatial parameter, *Spatial Rx Parameter,* in step S401. The spatial parameter *Spatial Rx Parameter* may be a spatial parameter in QCL-TypeD. In addition, the spatial parameter *Spatial Rx Parameter* may indicate a specific beam. Therefore, the interference information for a specific direction may be obtained according to the indication of the spatial parameter. For example, the method 400 may further include receiving beam information. The beam information may be a synchronization signal block (SSB) or a channel state information reference signal (CSI-RS) index. In step S401, interference measurement may be performed on the synchronization signal block (SSB) or the channel state information reference signal (CSI-RS) index according to the spatial parameter, and obtain a value of interference power or an interference power level corresponding to the SSB or the CSI-RS index. In other words, the processing unit 210 may obtain interference information for a specific beam according to the spatial parameter.

Furthermore, according to an example of the present disclosure, the receiving unit may also receive measurement resource configuration information. For example, the measurement resource configuration information may indicate a reference signal to be measured, indicate that the interference measurement is to be performed at least one of in an omnidirectional manner or according to the spatial parameter, and the like. The receiving unit may receive configured measurement resources configuration information or reference signals for measurement transmitted by a network side to the receiving device in a static, semi-static or dynamic way.

In step S402, the interference information obtained in step S401 is transmitted to the transmitting device. In addition, the method 400 may further include receiving feedback configuration information. The interference information may be transmitted to the transmitting device according to the feedback configuration information in step S402. For example, in the case where interference measurement is performed in a specific beam direction according to the SSB or CSI-RS index in step S401, interference information for each measured SSB or CSI-RS index, and a value of interference power or interference power level corresponding to the index may be transmitted to the transmitting device in step S402.

According to an example of the present disclosure, the receiving unit may receive the feedback configuration information transmitted by the network side. The feedback configuration information may indicate the receiving device to report interference measurement information to the transmitting device in a static, semi-static or dynamic way.

Furthermore, in step S402, the interference information may be transmitted on an authorized frequency band or an unauthorized frequency band. For example, in a CA/DC scenario, the interference information may be transmitted by using authorized resources in step S402 to improve feedback reliability. In a SA scenario, the transmitting unit 220 may use unauthorized resources to transmit the interference information.

In the embodiment according to the present disclosure, channel interference measurement is performed by a receiving device that receives data through an unauthorized frequency band, and the obtained interference information is transmitted to a transmitting device that is to use the unauthorized frequency band for transmission, so that the transmitting device can perform operations such as channel access to the unauthorized frequency band according to the interference information, thereby avoiding problems of hidden nodes and exposed nodes.

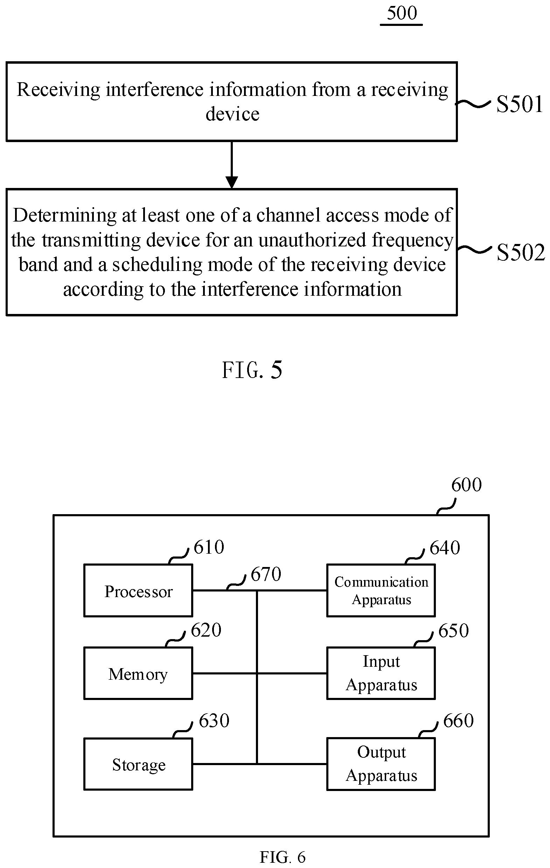

A method 500 for channel access according to an embodiment of the present disclosure will be described below with reference to FIG. 5. FIG. 5 is a flowchart of the method 500 for channel access to an unauthorized frequency band performed by a transmitting device according to an embodiment of the present disclosure. Since steps of the method 500 for channel access correspond to the operations of the transmitting device 300 described above with reference to the drawings, detailed description of the same content is omitted herein for simplicity.

As shown in FIG. 5, in step S501, interference information may be received from a receiving device. In particular, the interference information may be information obtained by the receiving device performing channel interference measurement on an unauthorized frequency band. The interference information has been described in detail above with reference to FIG. 2, which will not be repeatedly described herein.

In step S502, at least one of a channel access mode of the transmitting device for the unauthorized frequency band and a scheduling mode of the receiving device may be determined according to the interference information. According to an example of the present disclosure, the channel access mode for the unauthorized frequency band includes at least one of LBT type or category, priority and direction. The specific examples of determining at least one of LBT type or category, priority and direction used by the transmitting device according to the interference information has been described in detail above in conjunction with FIG. 3, Table 1 and Table 2, which will not be repeatedly described herein.

In step S502, at least one of a channel access mode of the transmitting device for an unauthorized frequency band and a scheduling mode of the receiving device may be determined according to the interference information from one receiving device. In particular, the determined channel access mode and scheduling mode of the receiving device may be for all receiving devices or any receiving device. Alternatively, in step S502, at least one of a channel access mode of the transmitting device for an unauthorized frequency band for scheduling and data transmission of the receiving device, and a scheduling mode of the receiving device may be determined according to the interference information from one receiving device. Alternatively, in step S502, at least one of a channel access mode of the transmitting device for an unauthorized frequency band and scheduling mode of receiving devices may be determined according to interference information from a plurality of receiving devices.

According to an example of the present invention, when a plurality of receiving devices connected to the transmitting device transmit interference information, according to the interference information of the plurality of receiving devices, at least one of a channel access mode of the transmitting device for an unauthorized frequency band and a scheduling mode of the receiving device may be determined in accordance with an interference level or interference value with the highest proportion in step S502.

Alternatively, in step S502, it does not need to determine, according to the interference information of the plurality of receiving devices, at least one of a channel access mode of the transmitting device for an unauthorized frequency band and a scheduling mode of the receiving device in accordance with an interference level or interference value with the highest proportion every time. Rather, only when the interference information indicates that the interference level or interference value with the highest proportion among the plurality of devices satisfies a predetermined condition, at least one of a channel access mode of the transmitting device for an unauthorized frequency band and a scheduling mode of the receiving device is determined in accordance with the interference level or interference value with the highest proportion. Otherwise, it may be determined in step S502 that the transmitting device uses an original channel access mode.

In addition, according to another example of the present invention, a scheduling priority of the receiving device may be determined according to the interference information in step S502. For example, in step S502, it may be determined that a receiving device with low interference has a high scheduling priority, whereas a receiving device with high interference has a low scheduling priority. Therefore, the transmitting device may preferentially schedule the receiving device with low interference.

In addition, according to another example of the present invention, the method in FIG. 5 may further include transmitting data to the receiving device after accessing the unauthorized frequency band according to the determined channel access mode. Furthermore, when the interference information indicates that one or more receiving devices are in a high interference state after the transmitting device accesses the channel, it may be determined to stop transmission and re-access the channel.

In the embodiment according to the present disclosure, the transmitting device performs operations such as channel access to an unauthorized frequency band according to interference information from a receiving device, thereby avoiding a difference between a transmitting end and a receiving end in detection of an idle state of channels, preventing problems of hidden nodes and exposed nodes, and bringing effective utilization of channel resources.

### <Hardware structure>

In addition, block diagrams used in the description of the above embodiments illustrate blocks in units of functions. These functional blocks (structural blocks) may be implemented in arbitrary combination of hardware and/or software. Furthermore, means for implementing respective functional blocks is not particularly limited. That is, the respective functional blocks may be implemented by one apparatus that is physically and/or logically jointed; or more than two apparatuses that are physically and/or logically separated may be directly and/or indirectly connected (e.g. by wired and/or wireless), and the respective functional blocks may be implemented by these apparatuses.

For example, a device (such as, the transmitting device, the receiving device, etc.) in an embodiment of the present disclosure may function as a computer that executes the processes of the wireless communication method of the present disclosure. FIG. 6 is a schematic diagram of a hardware structure of a device 600 (a base station or a terminal) involved in an embodiment of the present disclosure. The above device 600 (a base station or a terminal) may be constituted as a computer apparatus that physically comprises a processor 610, a memory 620, a storage 630, a communication apparatus 640, an input apparatus 650, an output apparatus 660, a bus 670 and the like

In addition, in the following description, terms such as "apparatus" may be replaced with circuits, devices, units, and the like. The hardware structure of the user terminal and the base station may include one or more of the respective apparatuses shown in one or more figures, or may not include a part of the apparatuses.

For example, only one processor 610 is illustrated, but there may be multiple processors. Furthermore, processes may be performed by one processor, or processes may be performed by more than one processor simultaneously, sequentially, or with other methods. In addition, the processor 610 may be installed by more than one chip.

Respective functions of the device 600 may be implemented, for example, by reading specified software (program) on hardware such as the processor 610 and the memory 620, so that the processor 610 performs computations, controls communication performed by the communication apparatus 640, and controls reading and/or writing of data in the memory 620 and the storage 630.

The processor 610, for example, operates an operating system to control the entire computer. The processor 610 may be constituted by a Central Processing Unit (CPU), which includes interfaces with peripheral apparatuses, a control apparatus, a computing apparatus, a register and the like. For example, the determining unit, the adjusting unit and the like described above may be implemented by the processor 610.

In addition, the processor 610 reads programs (program codes), software modules, data, and the like from the storage 630 and/or the communication apparatus 640 to the memory 620, and execute various processes according to them. As for the program, a program causing computers to execute at least a part of the operations described in the above embodiments may be employed. For example, the processing unit of the receiving device 200 and the transmitting device may be implemented by a control program stored in the memory 620 and operated by the processor 610, and other functional blocks may also be implemented similarly.

The memory 620 is a computer-readable recording medium, and may be constituted, for example, by at least one of a Read Only Memory (ROM), an Erasable Programmable ROM (EPROM), an Electrically EPROM (EEPROM), a Random Access Memory (RAM) and other appropriate storage media. The memory 620 may also be referred to as a register, a cache, a main memory (a main storage apparatus) and the like. The memory 620 may store executable programs (program codes), software modules and the like for implementing a method involved in an embodiment of the present disclosure.

The storage 630 is a computer-readable recording medium, and may be constituted, for example, by at least one of a flexible disk, a floppy ○,^{R} disk, a magneto-optical disk (e.g., a Compact Disc ROM (CD-ROM) and the like), a digital versatile disk, a Blu-ray○,^{R} disk, a removable disk, a hard driver, a smart card, a flash memory device (e.g., a card, a stick and a key driver), a magnetic stripe, a database, a server, and other appropriate storage media. The storage 630 may also be referred to as an auxiliary storage apparatus.

The communication apparatus 640 is a hardware (transceiver apparatus) performing communication between computers via a wired and/or wireless network, and is also referred to as a network device, a network controller, a network card, a communication module and the like, for example. The communication apparatus 640 may include a high-frequency switch, a duplexer, a filter, a frequency synthesizer and the like to implement, for example, Frequency Division Duplex (FDD) and/or Time Division Duplex (TDD). For example, the transmitting unit, the receiving unit and the like described above may be implemented by the communication apparatus 640.

The input apparatus 650 is an input device (e.g., a keyboard, a mouse, a microphone, a switch, a button, a sensor and the like) that receives input from the outside. The output apparatus 660 is an output device (e.g., a display, a speaker, a Light Emitting Diode (LED) light and the like) that performs outputting to the outside. In addition, the input apparatus 650 and the output apparatus 660 may also be an integrated structure (e.g., a touch screen).

Furthermore, the respective apparatuses such as the processor 610 and the memory 620 are connected by the bus 670 that communicates information. The bus 670 may be constituted by a single bus or by different buses between the apparatuses.

Furthermore, the transmitting device and the receiving device may comprise hardware such as a microprocessor, a Digital Signal Processor (DSP), an Application Specified Integrated Circuit (ASIC), a Programmable Logic Device (PLD), a Field Programmable Gate Array (FPGA), etc., and the hardware may be used to implement a part of or all of the respective functional blocks. For example, the processor 610 may be installed by at least one of these hardware.

### (Variations)

In addition, the terms illustrated in the present specification and/or the terms required for understanding of the present specification may be substituted with terms having the same or similar meaning. For example, a channel and/or a symbol may also be a signal (signaling). Furthermore, the signal may be a message. A reference signal may be abbreviated as an "RS", and may also be referred to as a pilot, a pilot signal and so on, depending on the standard applied. Furthermore, a component carrier (CC) may also be referred to as a cell, a frequency carrier, a carrier frequency, and the like.

Furthermore, the information, parameters and so on described in this specification may be represented in absolute values or in relative values with respect to specified values, or may be represented by other corresponding information. For example, radio resources may be indicated by specified indexes. Furthermore, formulas and the like using these parameters may be different from those explicitly disclosed in this specification.

The names used for the parameters and the like in this specification are not limited in any respect. For example, since various channels (Physical Uplink Control Channels (PUCCHs), Physical Downlink Control Channels (PDCCHs), etc.) and information elements may be identified by any suitable names, the various names assigned to these various channels and information elements are not limitative in any respect.

The information, signals and the like described in this specification may be represented by using any one of various different technologies. For example, data, instructions, commands, information, signals, bits, symbols, chips, etc. possibly referenced throughout the above description may be represented by voltages, currents, electromagnetic waves, magnetic fields or particles, optical fields or photons, or any combination thereof.

In addition, information, signals and the like may be output from higher layers to lower layers and/or from lower layers to higher layers. Information, signals and the like may be input or output via a plurality of network nodes.

The information, signals and the like that are input or output may be stored in a specific location (for example, in a memory), or may be managed in a control table. The information, signals and the like that are input or output may be overwritten, updated or appended. The information, signals and the like that are output may be deleted. The information, signals and the like that are input may be transmitted to other apparatuses.

Reporting of information is by no means limited to the manners/embodiments described in this specification, and may be implemented by other methods as well. For example, reporting of information may be implemented by using physical layer signaling (for example, downlink control information (DCI), uplink control information (UCI)), higher layer signaling (for example, RRC (Radio Resource Control) signaling, broadcast information (master information blocks (MIBs), system information blocks (SIBs), etc.), Medium Access Control (MAC) signaling), other signals or combinations thereof.

In addition, physical layer signaling may also be referred to as L1/L2 (Layer 1/Layer 2) control information (L1/L2 control signals), L1 control information (L1 control signal) and the like. Furthermore, RRC signaling may also be referred to as RRC messages, for example, RRC connection setup messages, RRC connection reconfiguration messages, and so on. Furthermore, MAC signaling may be reported by using, for example, MAC control elements (MAC CEs).

Furthermore, notification of prescribed information (for example, notification of "being X") is not limited to being performed explicitly, and may be performed implicitly (for example, by not performing notification of the prescribed information or by notification of other information).

Decision may be performed by a value (0 or 1) represented by 1 bit, or by a true or false value (Boolean value) represented by TRUE or FALSE, or by a numerical comparison (e.g., comparison with a prescribed value).

Software, whether referred to as "software", "firmware", "middleware", "microcode" or "hardware description language", or called by other names, should be interpreted broadly to mean instructions, instruction sets, code, code segments, program codes, programs, subprograms, software modules, applications, software applications, software packages, routines, subroutines, objects, executable files, execution threads, procedures, functions and so on.

In addition, software, commands, information, etc. may be transmitted and received via a transport medium. For example, when software is transmitted from web pages, servers or other remote sources using wired technologies (coaxial cables, fiber optic cable s, twisted pairs, Digital Subscriber Lines (DSLs), etc.) and/or wireless technologies (infrared ray, microwave, etc.), these wired technologies and/or wireless technologies are included in the definition of the transport medium.

The terms "system" and "network" used in this specification may be used interchangeably.

In this specification, terms like "Base Station (BS)", "wireless base station", "eNB", "gNB", "cell", "sector", "cell group", "carrier" and "component carrier" may be used interchangeably. A base station is sometimes referred to as terms such as a fixed station, a NodeB, an eNodeB (eNB), an access point, a transmitting point, a receiving point, a femto cell, a small cell and the like.

A base station is capable of accommodating one or more (for example, three) cells (also referred to as sectors). In the case where the base station accommodates a plurality of cells, the entire coverage area of the base station may be divided into a plurality of smaller areas, and each smaller area may provide communication services by using a base station sub-system (for example, a small base station for indoor use (a Remote Radio Head (RRH)). Terms like "cell" and "sector" refer to a part of or an entirety of the coverage area of a base station and/or a sub-system of the base station that provides communication services in this coverage.

In this specification, terms such as "Mobile Station (MS)", "user terminal", "User Equipment (UE)", and "terminal" may be used interchangeably. The mobile station is sometimes referred by those skilled in the art as a user station, a mobile unit, a user unit, a wireless unit, a remote unit, a mobile device, a wireless device, a wireless communication device, a remote device, a mobile user station, an access terminal, a mobile terminal, a wireless terminal, a remote terminal, a handset, a user agent, a mobile client, a client, or some other appropriate terms.

Furthermore, a wireless base station in this specification may also be replaced with a user terminal. For example, for a structure in which communication between a wireless base station and a user terminal is replaced with communication between a plurality of user terminals (Device-to-Device, D2D), the respective manners/embodiments of the present disclosure may also be applied. At this time, functions provided by the first communication device or the second communication device of the above device 800 may be regarded as functions provided by a user terminal. Furthermore, the words "uplink" and "downlink" may also be replaced with "side". For example, an uplink channel may be replaced with a side channel.

Also, a user terminal in this specification may be replaced with a wireless base station. At this time, functions provided by the above user terminal may be regarded as functions provided by the first communication device or the second communication device.

In this specification, specific actions configured to be performed by the base station sometimes may be performed by its upper nodes in certain cases. Obviously, in a network composed of one or more network nodes having base stations, various actions performed for communication with terminals may be performed by the base stations, one or more network nodes other than the base stations (for example, Mobility Management Entities (MMEs), Serving-Gateways (S-GWs), etc., may be considered, but not limited thereto)), or combinations thereof.

The respective manners/embodiments described in this specification may be used individually or in combinations, and may also be switched and used during execution. In addition, orders of processes, sequences, flow charts and so on of the respective manners/embodiments described in this specification may be re-ordered as long as there is no inconsistency. For example, although various methods have been described in this specification with various units of steps in exemplary orders, the specific orders as described are by no means limitative.

The manners/embodiments described in this specification may be applied to systems that utilize Long Term Evolution (LTE), Advanced Long Term Evolution (LTE-A, LTE-Advanced), Beyond Long Term Evolution (LTE-B, LTE-Beyond), the super 3rd generation mobile communication system (SUPER 3G), Advanced International Mobile Telecommunications (IMT-Advanced), the 4th generation mobile communication system (4G), the 5th generation mobile communication system (5G), Future Radio Access (FRA), New Radio Access Technology (New-RAT), New Radio (NR), New radio access (NX), Future generation radio access (FX), Global System for Mobile communications (GSM○,^{R}), Code Division Multiple Access 3000 (CDMA 3000), Ultra Mobile Broadband (UMB), IEEE 920.11 (Wi-Fi○,^{R}), IEEE 920.16 (WiMAXO,R), IEEE 920.20, Ultra-Wide Band (UWB), Bluetooth ○,^{R} and other appropriate wireless communication methods, and/or next-generation systems that are enhanced based on them.

Terms such as "based on" as used in this specification do not mean "based on only", unless otherwise specified in other paragraphs. In other words, terms such as "based on" mean both "based on only" and "at least based on."

Any reference to units with designations such as "first", "second" and so on as used in this specification does not generally limit the quantity or order of these units. These designations may be used in this specification as a convenient method for distinguishing between two or more units. Therefore, reference to a first unit and a second unit does not imply that only two units may be employed, or that the first unit must precedes the second unit in several ways.

Terms such as "deciding (determining)" as used in this specification may encompass a wide variety of actions. The "deciding (determining)" may regard, for example, calculating, computing, processing, deriving, investigating, looking up (e.g., looking up in a table, a database or other data structures), ascertaining, etc. as performing the "deciding (determining)". In addition, the "deciding (determining)" may also regard receiving (e.g., receiving information), transmitting (e.g., transmitting information), inputting, outputting, accessing (e.g., accessing data in a memory), etc. as performing the "deciding (determining)". In addition, the "deciding (determining)" may further regard resolving, selecting, choosing, establishing, comparing, etc. as performing the "deciding (determining)". That is to say, the "deciding (determining)" may regard certain actions as performing the "deciding (determining)".

As used herein, terms such as "connected", "coupled", or any variation thereof mean any direct or indirect connection or coupling between two or more units, and may include the presence of one or more intermediate units between two units that are "connected" or "coupled" to each other. Coupling or connection between the units may be physical, logical or a combination thereof. For example, "connection" may be replaced with "access." As used in this specification, two units may be considered as being "connected" or "coupled" to each other by using one or more electrical wires, cables and/or printed electrical connections, and, as a number of non-limiting and non-inclusive examples, by using electromagnetic energy having wavelengths in the radio frequency region, microwave region and/or optical (both visible and invisible) region.

When terms such as "including", "comprising" and variations thereof are used in this specification or the claims, these terms, similar to the term "having", are also intended to be inclusive. Furthermore, the term "or" as used in this specification or the claims is not an exclusive or.

Although the present disclosure has been described above in detail, it should be obvious to a person skilled in the art that the present disclosure is by no means limited to the embodiments described in this specification. The present disclosure may be implemented with various modifications and alterations without departing from the spirit and scope of the present disclosure defined by the recitations of the claims. Consequently, the description in this specification is for the purpose of illustration, and does not have any limitative meaning to the present disclosure.

## Claims

1. A receiving device, comprising:
a processing unit, configured to perform interference measurement on an unauthorized frequency band to obtain interference information; and
a transmitting unit, configured to transmit the interference information to a transmitting device.

2. The receiving device of claim 1, wherein
the processing unit performs the interference measurements omnidirectionally or according to a spatial parameter.

3. The receiving device of claim 1 or 2, wherein
the processing unit performs the interference measurement on a synchronization signal block or a channel state information reference signal index according to a spatial parameter;
the interference information includes information indicating the synchronization signal block or the channel state information reference signal index, and an interference level or an interference value corresponding to the synchronization signal block or the channel state information reference signal index.

4. A transmitting device, comprising:
a receiving unit, configured to receive interference information from a receiving device;
a processing unit, configured to determine at least one of a channel access mode of the transmitting device for an unauthorized frequency band and a scheduling mode of the receiving device according to the interference information.

5. The transmitting device of claim 4, wherein
the channel access mode for the unauthorized frequency band includes at least one of a type, priority and direction of Listen Before Talk.

6. The transmitting device of claim 4 or 5, wherein
the processing unit determines at least one of the channel access mode of the transmitting device for an unauthorized frequency band and the scheduling mode of the receiving device according to the interference information from one or more receiving devices.

7. The transmitting device of claim 4 or 5, wherein
the processing unit is further configured to determine that a particular terminal is in a high interference state when no interference information is received from the terminal within a predetermined period of time.

8. The transmitting device of claim 4 or 5, further comprising:
a transmitting unit, configured to stop transmission when the interference information received by the transmitting device after channel access indicates that the receiving device is in a high interference state.

9. A method for transmitting interference information performed by a receiving device, comprising:
performing interference measurement on an unauthorized frequency band to obtain interference information; and
transmitting the interference information to a transmitting device.

10. A method for channel access to an unauthorized frequency band performed by a transmitting device, comprising:
receiving interference information from a receiving device; and
determining at least one of a channel access mode of the transmitting device for an unauthorized frequency band and a scheduling mode of the receiving device according to the interference information.
